# EUROPEAN PATENT APPLICATION

(11) **EP 1 292 066 A1**
(43) Date of publication of application: **12.03.2003**
(21) Application number: 02019688.7
(22) Date of filing: 04.09.2002
(51) Int. Cl.: H04L 9/06

(54) **An apparatus for generating encryption or decryption keys**

(30) Priority: 08.09.2001 GB 0121793
(71) Applicant: Amphion Semiconductor Limited, Belfast BT9 5BS (GB)
(72) Inventor: Hu, Yi, Belfast (GB); McLoone, Maire Patricia, Glenties, County Donegal (GB)
(74) Representative: Wallace, Alan

(57) **Abstract**

The invention provides an apparatus for generating a plurality of sub-keys from a primary key comprising a plurality of data words. The apparatus comprises a shift register for storing the primary key; and a transformation apparatus arranged to perform one or more logical operations on respective data words from the shift register to produce a new data word. The arrangement is such that the new data word is loaded into the shift register, whereupon one of the data words stored in said shift register is shifted out of the shift register, the sub-keys being comprised of one or more of the output data words. The apparatus is particularly suitable for on-the-fly Rijndael decryption Round key calculation. In this context, the invention obviates the need to store the expanded key or to wait until the expanded key is generated from the cipher key before beginning decryption. This removes a latency of at least 10 clock cycles in the operation of the decryption apparatus.

## Description

### FIELD OF THE INVENTION

The present invention relates to the field of data encryption. The invention relates particularly to an apparatus for generating data encryption or decryption keys.

### BACKGROUND TO THE INVENTION

Secure or private communication, particularly over a telephone network or a computer network, is dependent on the encryption, or enciphering, of the data to be transmitted. One type of data encryption, commonly known as private key encryption or symmetric key encryption, involves the use of a key, normally in the form of a pseudo-random number, or code, to encrypt data in accordance with a selected data encryption algorithm (DEA). To decipher the encrypted data, a receiver must know and use the same key in conjunction with the inverse of the selected encryption algorithm. Thus, anyone who receives or intercepts an encrypted message cannot decipher it without knowing the key.

Data encryption is used in a wide range of applications including IPSec Protocols, ATM Cell Encryption, Secure Socket Layer (SSL) protocol and Access Systems for Terrestrial Broadcast.

In September 1997 the National Institute of Standards and Technology (NIST) issued a request for candidates for a new Advanced Encryption Standard (AES) to replace the existing Data Encryption Standard (DES). A data encryption algorithm commonly known as the Rijndael Block Cipher was selected for the new AES.

As part of the Rijndael encryption process, the cipher key is expanded to produce an expanded key from which a number of sub-keys, or round keys, can be selected. Round keys are also required during decryption. The present invention concerns improvements in the generation of round keys for both encryption and decryption and relates particularly, but not exclusively, to the Rijndael cipher.

### Summary of the Invention

A first aspect of the present invention provides an apparatus for generating a plurality of sub-keys from a primary key comprising a plurality of data words, the apparatus comprising: a shift register having a plurality of storage locations one for each data word of the primary key; and a transformation apparatus arranged to perform one or more logical operations on respective data words from at least two of said storage locations to produce a new data word, the arrangement being such that said new data word is loaded into a first of said storage locations, whereupon the data words stored in said shift register are shifted to a respective successive storage location and the data word in a final of said storage locations is output from said shift register, said sub-keys being comprised of one or more of said output data words.

The apparatus of the invention, when implemented in hardware, is relatively small in comparison to conventional solutions particularly since it avoids using multiplexers, or other switches, when selecting and distributing sub-keys. Further, the invention allows on-the-fly Rijndael decryption Round key calculation. This is advantageous as it obviates the need to store the expanded key or to wait until the expanded key is generated from the cipher key before beginning decryption. This removes a latency of at least 10 clock cycles in the operation of a data decryption apparatus.

Preferably, said new data word is loaded into said first storage location via a first switch, said switch being arranged to select which of said storage locations serves as said first storage location. More preferably, said at least one data word is provided to said transformation module from said shift register via a second switch, the second switch being arranged to select from which storage location said at least one data word is provided.

In the preferred embodiment, the transformation apparatus is arranged to perform transformations according to the Rijndael block cipher.

In one embodiment, the shift register is initialised with a primary key comprising a Rijndael cipher key and said transformation apparatus is arranged to perform said one or more logical operations on the respective data words stored in said first and said final storage locations.

In an alternative embodiment, the shift register is initialised with a primary key comprising a Rijndael inverse cipher key and said transformation apparatus is arranged to perform said one or more logical operations on the respective data words stored in said final storage location and the penultimate storage location.

A second aspect of the invention provides a method of generating a plurality of sub-keys from a primary key comprising a plurality of data words, method comprising: loading the primary key into a shift register having a plurality of storage locations one for each data word of the primary key; performing one or more logical operations on respective data words from at least two of said storage locations to produce a new data word; loading said new data word into a first of said storage locations, whereupon the data words stored in said shift register are shifted to a respective successive storage location and the data word in a final of said storage locations is output from said shift register, said sub-keys being comprised of one or more of said output data words.

A third aspect of the invention provides a data encryption and/or decryption apparatus comprising the apparatus for generating a plurality of sub-keys according to the first aspect of the invention.

A fourth aspect of the invention comprises a computer program product comprising computer usable instructions for generating the apparatus of the first aspect of the invention.

An apparatus according to the first or third aspects of the invention may be implemented in a number of conventional ways, for example as an Application Specific Integrated Circuit (ASIC) or a Field Programmable Gate Array (FPGA). The implementation process may also be one of many conventional design methods including standard cell design or schematic entry/layout synthesis. Alternatively, the apparatus may be described, or defined, using a hardware description language (HDL) such as VHDL, Verilog HDL or a targeted netlist format (e.g. xnf, EDIF or the like) recorded in an electronic file, or computer useable file.

Thus, the invention further provides a computer program, or computer program product, comprising program instructions, or computer usable instructions, arranged to generate, in whole or in part, an apparatus according to the first or third aspects of the invention. The apparatus may be implemented as a set of suitable such computer programs. Typically, the computer program comprises computer usable statements or instructions written in a hardware description, or definition, language (HDL) such as VHDL, Verilog HDL or a targeted netlist format (e.g. xnf, EDIF or the like) and recorded in an electronic or computer usable file which, when synthesised on appropriate hardware synthesis tools, generates semiconductor chip data, such as mask definitions or other chip design information, for generating a semiconductor chip. The invention also provides said computer program stored on a computer useable medium. The invention further provides semiconductor chip data, stored on a computer usable medium, arranged to generate, in whole or in part, an apparatus according to the first or third aspects of the invention.

Other aspects of the invention will be apparent to those ordinarily skilled in the art upon review of the following description of specific embodiments and with reference to the accompanying drawings.

### BRIEF DESCRIPTION OF THE DRAWINGS

Embodiments of the invention are now described by way of example and with reference to the accompanying drawings in which:
Figure 1a is a representation of data bytes arranged in a State rectangular array;
Figure 1b is a representation of a cipher key arranged in a rectangular array;
Figure 1c is a representation of an expanded key schedule;
Figure 2 is a schematic illustration of the Rijndael Block Cipher;
Figure 3 is a schematic illustration of a normal Rijndael Round;
Figure 4 is a schematic illustration of how round keys are required during Rijndael encryption;
Figure 4a is a schematic illustration of how round keys are required during Rijndael decryption;
Figure 5a is a schematic representation of an encryption apparatus for implementing the Rijndael cipher;
Figure 5b is a schematic representation of a decryption apparatus for implementing the Rijndael cipher
Figure 6 shows a flow chart for implementing the Rijndael key schedule for a 128-bit cipher key;
Figure 6a shows a flow chart for implementing the Rijndael key schedule for a 192-bit cipher key;
Figure 6b shows a flow chart for implementing the Rijndael key schedule for a 256-bit cipher key;
Figure 7 shows a composite flow chart for implementing the Rijndael key schedule for 128-bit, 192-bit or 256-bit cipher key;
Figure 8 shows a composite flow chart for implementing the Rijndael key schedule for 128-bit, 192-bit or 256-bit inverse cipher key;
Figure 9 shows, in general schematic view, an apparatus according to the invention for implementing Rijndael key expansion during encryption;
Figure 9a shows a specific embodiment of the apparatus of Figure 9 where *N*_{*k*} *=* 4;
Figure 9b shows an alternative embodiment of the apparatus of Figure 9 where *N*_{*k*} = 4, 6 or 8;
Figure 10 shows, in general schematic view, an apparatus according to the invention for implementing Rijndael key expansion during decryption using an inverse cipher key;
Figure 10a shows a specific embodiment of the apparatus of Figure 10 where *N*_{*k*} = 4;
Figure 10b shows a further embodiment of the apparatus of Figure 10 where *N*_{*k*} = 4, 6 or 8; and
Figure 11 shows values for use in a Look-Up Table (LUT) for implementing the Rijndael ByteSub transformation.

### DETAILED DESCRIPTION OF THE DRAWINGS

The Rijndael algorithm is a private key, or symmetric key, DEA and is an iterated block cipher. The Rijndael algorithm (hereinafter "Rijndael") is defined in the publication "The Rijndael Block Cipher: AES proposal" by J. Daemen and V. Rijmen presented at the First AES Candidate Conference (AES1) of August 20-22, 1998, the contents of which publication are hereby incorporated herein by way of reference.

In accordance with many private key DEAs, including Rijndael, encryption is performed in multiple stages, commonly known as iterations, or rounds. Each round uses a respective sub-key, or round key, to perform its encryption operation. The round keys are derived from a primary key, or cipher key.

The data to be encrypted, sometimes known as plaintext, is divided into blocks for processing. Similarly, data to be decrypted is processed in blocks. With Rijndael, the data block length and cipher key length can be 128, 192 or 256 bits. The NIST requested that the AES must implement a symmetric block cipher with a block size of 128 bits, hence the variations of Rijndael which can operate on larger block sizes do not form part of the standard itself. Rijndael also has a variable number of rounds namely, 10, 12 and 14 when the cipher key lengths are 128, 192 and 256 bits respectively.

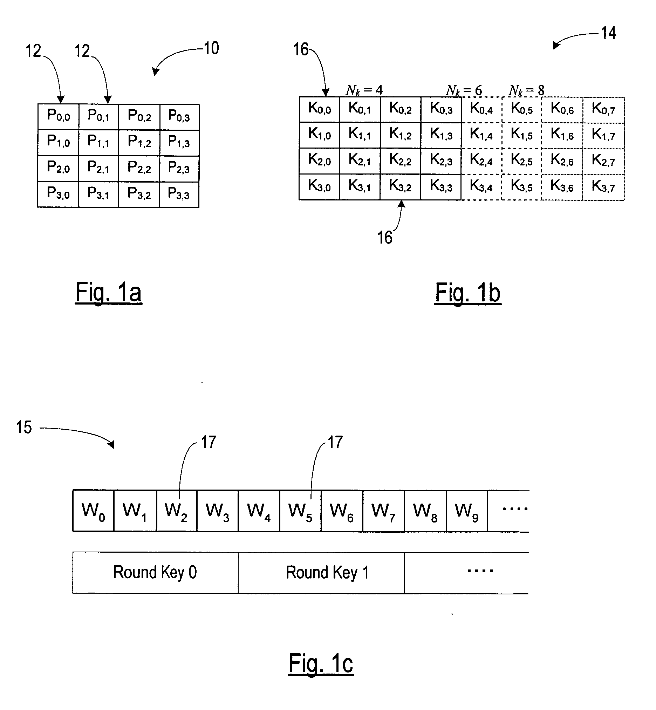

With reference to Figure 1a, the transformations performed during the Rijndael encryption operations consider a data block as a 4-column rectangular array, or State (generally indicated at 10 in Figure 1a), of 4-byte vectors, or words, 12. For example, a 128-bit plaintext (i.e. unencrypted) data block consists of 16 bytes, B₀, B₁, B₂, B₃, B₄... B₁₄, B₁₅. Hence, in the State 10, B₀ becomes P_{0,0}, B₁ becomes P_{1,0}, B₂ becomes P_{2,0} ... B₄ becomes P_{0,1} and so on.

Figure 1a shows the state 10 for the standards compliant 128-bit data block length. For data block lengths of 192-bits or 256-bits, the state 10 comprises 6 and 8 columns of 4-byte vectors respectively. It will be understood that the term 'word' as used herein refers to a basic unit or block of data and is not intended to imply any particular size.

With reference to Figure 1b, the cipher key is also considered to be a multi-column rectangular array 14 of 4-byte vectors, or words, 16, the number of columns, *N*_{*k*}, depending on the cipher key length. Thus, for cipher key lengths of 128-bits, 192-bits and 256 bits, the key block length *N*_{*k*} is 4, 6 and 8 respectively. In Figure 1b, the vectors 16 headed by bytes K_{0,4} and K_{0,5} are present when the cipher key length is 192-bits or 256-bits, while the vectors 16 headed by bytes K_{0,6} and K_{0,7} are only present when the cipher key length is 256-bits.

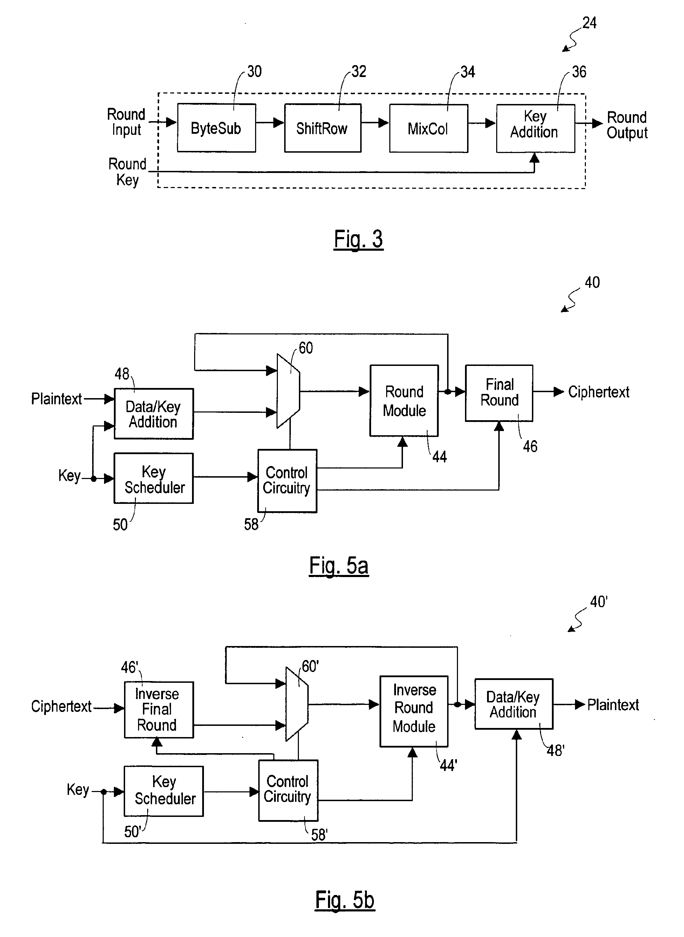

Referring now to Figure 2, there is shown, generally indicated at 20, a schematic representation of Rijndael. The algorithm design consists of an initial data/key addition operation 22, in which a plaintext data block is added to the cipher key, followed by nine, eleven or thirteen rounds 24 when the key length is 128-bits, 192-bits or 256-bits respectively and a final round 26, which is a variation of the typical round 24. There is also a key schedule operation 28 for expanding the cipher key in order to produce a respective different round key for each round 24, 26.

Figure 3 illustrates the typical Rijndael round 24. The round 24 comprises a ByteSub transformation 30, a ShiftRow transformation 32, a MixColumn transformation 34 and a Round Key Addition 36. The ByteSub transformation 30, which is also known as the *s-box* of the Rijndael algorithm, operates on each byte in the State 10 independently.

The transformations and other operations (including logical operations) involved in the normal round 24 and the final round 26 are defined in the Rijndael specification referred to above and may be implemented in a number of conventional ways.

The Rijndael key schedule 28 consists of two parts: Key Expansion and Round Key Selection. Key Expansion involves expanding the cipher key into an expanded key, namely a linear array 15 (Fig. 1c) of 4-byte vectors or words 17, the length of the array 15 being determined by the data block length, *N*_{*b*}, (in bytes) multiplied by the number of rounds, *N*_{*r*}, plus 1, i.e. array length = *N*_{*b*} *** (*N*_{*r*} + 1). In standards-compliant Rijndael, the data block length is four words, *N*_{*b*} = 4. When the key block length, *N*_{*k*} = 4, 6 and 8, the number of rounds is 10, 12 and 14 respectively. Hence the lengths of the expanded key are as shown in Table 1 below.

**Table 1.**

| Length of Expanded Key for Varying Key Sizes | | | |
|---|---|---|---|
| **Data Block Length, *N***_{***b***} | 4 | 4 | 4 |
| **Key Block Length, *N***_{***k***} | 4 | 6 | 8 |
| **Number of Rounds, *N***_{***r***} | 10 | 12 | 14 |
| **Expanded Key Length** | *44* | *52* | *60* |

The first *N*_{*k*} words of the expanded key comprise the cipher key. When *N*_{*k*} = 4 or 6, each subsequent word, W[i], is found by XORing the previous word, W[*i*-1], with the word *N*_{*k*} positions earlier, W[i-*N*_{*k*}]. For words 17 in positions which are a multiple of *N*_{*k*}, a transformation is applied to W[i-1] before it is XORed. This transformation involves a cyclic shift of the bytes in the word 17. Each byte is passed through the Rijndael s-box 30 and the resulting word is XORed with a round constant stipulated by Rijndael (see *Rcon(i)* function described below). However, when *N*_{*k*} = 8, an additional transformation is applied: for words 17 in positions which are a multiple of ((*N*_{*k*}*i)+ 4), each byte of the word, W[i-1], is passed through the Rijndael s-box 30.

The round keys are selected from the expanded key 15. In a design with *N*_{*r*} rounds, *N*_{*r*} +1 round keys are required.
For example a 10-round design requires 11 round keys. Round key 0 comprises words W[0] to W[3] of the expanded key 15 (i.e. round key 0 corresponds with the cipher key itself) and is utilised in the initial data/key addition 22, round key 1 comprises W[4] to W[7] and is used in round 0, round key 2 comprises W[8] to W[11] and is used in round 1 and so on. Finally, round key 10 is used in the final round 26.

The decryption process in Rijndael is effectively the inverse of its encryption process. Decryption comprises an inverse of the final round 26, inverses of the rounds 24, followed by the initial data/key addition 22. The encryption process is described in the Rijndael specification and may be implemented in a number of conventional ways.

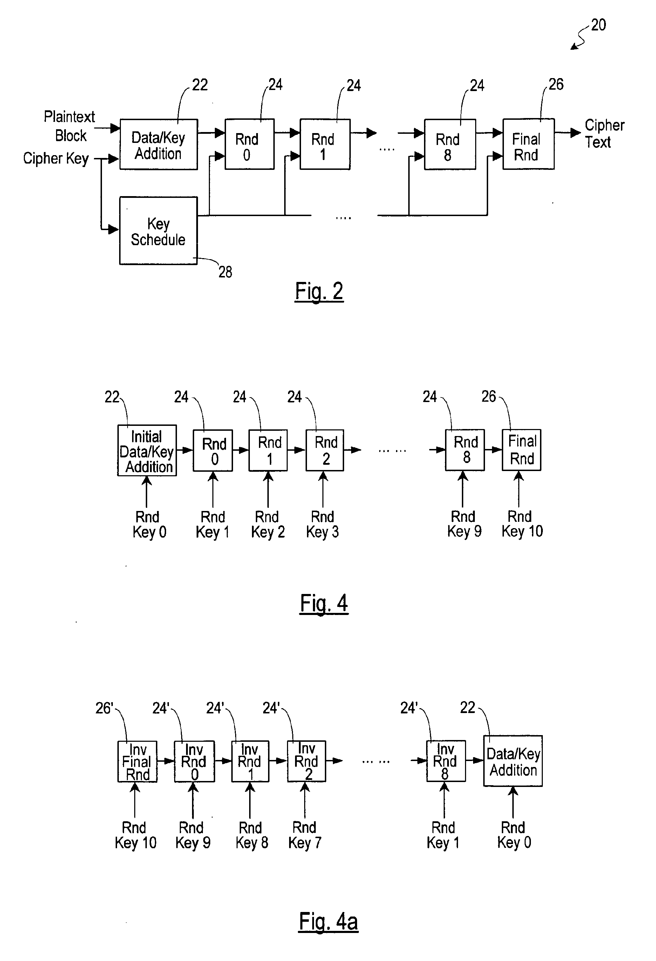

The same cipher key is used for decryption as was used to encrypt the data. Therefore, during decryption, the key schedule 28 does not change. However, the round keys constructed for encryption (i.e. during the key expansion described above) are now used in reverse order. For example, in a 10-round design, round key 0 is still utilized in the initial data/key addition 22 and round key 10 in the inverse of the final round 26. However, round key 1 is now used in round 8, round key 2 in round 7 and so on. Figures 4 and 4a illustrate how the round keys, denoted as *Rnd Key* in Figures 4 and 4a, are required by each round 24, 26 during encryption and decryption respectively.

Normally, all of the round keys are generated from the cipher key before decryption can begin (since the round keys are required in reverse order during decryption). This normally introduces a delay into the decryption process since the decryption apparatus has to wait a number of clock cycles (10 clock cycles in the 10-round example above) before the relevant round keys are available. Further, the round keys need to be stored until they are needed - this is conveniently done by using data registers. Alternatively, the round keys can be precomputed and stored in memory until they are required by the decryption apparatus.

A further alternative is to calculate the round keys for decryption by using the last *N*_{*k*} words created during key expansion in the encryption process as the cipher key for decryption - the last *N*_{*k*} words are known as the inverse cipher key. By expanding the inverse cipher key, the round keys can be created as they are required by the inverse rounds during decryption. Since encryption is always performed prior to decryption, the inverse cipher key is readily available as it is produced during key expansion for encryption. Thus, there is no need to wait until all the round keys are available before beginning decryption, and there is no need to provide means for storing the round keys as described above.

A number of different architectures can be considered when designing an apparatus or circuit for implementing encryption algorithms. These include Iterative Looping (IL), where only one data processing module is used to implement all of the rounds. Hence for an n-round algorithm, n iterations of that round are carried out to perform an encryption, data being passed through the single instance of data processing module n times. Loop Unrolling (LU) involves the unrolling of multiple rounds. Pipelining (P) is achieved by replicating the round i.e. devising one data processing module for implementing the round and using multiple instances of the data processing module to implement successive rounds. In such an architecture, data registers are placed between each data processing module to control the flow of data. A pipelined architecture generally provides the highest throughput. Sub-Pipelining (SP) can be carried out on a partially pipelined design when the round is complex. This decreases the pipeline's delay between stages but increases the number of clock cycles required to perform an encryption.

The present invention relates to an apparatus for generating round keys for use in a data encryption and/or data decryption apparatus. The invention is not limited to use with any particular types of architecture for the overall encryption/decryption apparatus. However, the embodiments of the invention described herein relate particularly to the case where each encryption or decryption round is performed in four clock cycles (where *N*_{*b*} = 4 and each cycle processes 32-bits at a time), irrespective of whether the overall encryption/decryption apparatus is iterative or pipelined. It will be understood that the invention applies equally where *N*_{*b*} *=* 6 or 8, in which cases the rounds are performed in 6 and 8 cycles respectively and complete round keys are produced every 6 and 8 clock cycles respectively.

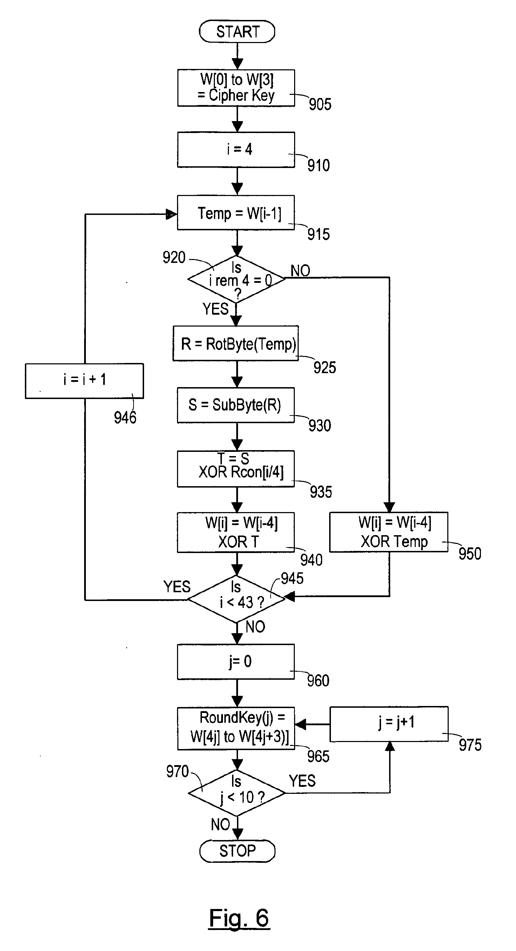

Referring now to Figure 5a, there is shown, for illustrative purposes only, an apparatus 40 for encrypting blocks of data. The apparatus 40 is arranged to receive a plaintext input data block (shown as "plaintext" in Figure 5a) and a cipher key (shown as "key" in Figure 5a) and to produce, after a number of encryption rounds, an encrypted data block (shown as "ciphertext" in Figure 5a).

The apparatus 40 comprises a data/key addition module 48 for performing the data/key addition operation 22 (Figure 2). The Data/Key Addition module 48 conveniently comprises an XOR component (not shown) arranged to perform a bitwise XOR operation of each byte Bᵢ of the State 10 comprising the input plaintext, with a respective byte Kᵢ of the cipher key.

The apparatus 40 also includes a data processing module in the form of a round module 44 for implementing the encryption rounds 24. In the illustrated example, the data block length *N*_{*b*} is assumed to be 128-bits. The data/key addition module 48 provides, via a 2-to-1 switch or multiplexer 60, the result of the data/key addition operation to the round module 44. In the present example, the result of the data/key addition operation comprises 128-bits of data and control circuitry 58 is arranged to control the switch 60 to supply this data the round module 44. The control circuitry 58 then controls the switch 60 to implement a feedback loop from the output of the round module 44. In the present example, the round module 44 is arranged to perform encryption operations on one quarter of the received data, in this case 32-bits, in each clock cycle. Thus, the round module 44 performs one round transform every four clock cycles, the first four clock cycles producing the result of round 0, the next four clock cycles producing the result of round 1, and so on. Once all of the required encryption rounds are completed, the encrypted data is provided to a final round module 46 which implements the Rijndael final round to produce the output ciphertext.

Figure 5b shows a data decryption apparatus 40' of generally similar iterative design as the encryption apparatus 40. The decryption apparatus 40' is arranged to receive a ciphertext input data block and an inverse cipher key and to produce, after a number of decryption rounds, a decrypted data block (plaintext). In the decryption apparatus 40' the respective positions of the data/key addition module 48' and the inverse final round module 46' are interchanged and the round module 44' is arranged to perform the inverse of the encryption round.

In each case, the encryption apparatus 40 and decryption apparatus 40' each include a key schedule module 50, 50' arranged to implement the key schedule 28. The key schedule modules 50, 50' are arranged to receive the cipher key and the inverse cipher key, respectively, and to generate the round keys, or sub-keys, as they are required by the respective round modules 44, 44', 46, 46'. In the present example, the key schedulers 50, 50 produce a round key over four consecutive clock cycles and thus the production of round keys is synchronised with the four clock cycle round transformation implemented by the round modules 44, 44'. The respective control circuitry 58, 58' receives the round keys from the key schedule modules 50, 50' and distributes them to the round modules 44, 44', 46, 46' as required. The final round 46 and the inverse final round 46' may be arranged to operate on 128-bits at a time (i.e. to perform its round transformation in one clock cycle) or on 32-bits at a time (i.e. to perform its round transformation in four clock cycles) as desired and the control circuitry 58, 58' may be arranged to provide the respective round key accordingly.

The present invention concerns in particular the implementation of the key schedulers 50, 50' as is described in more detail hereinafter.

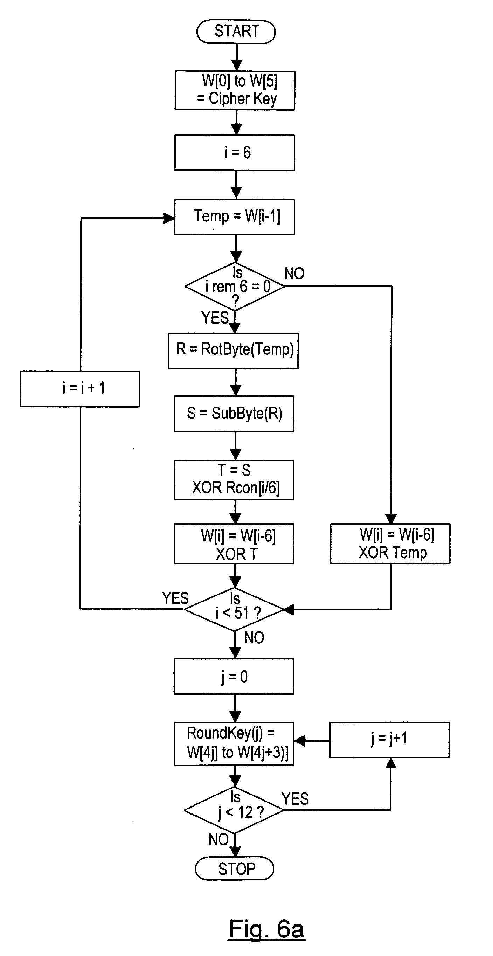

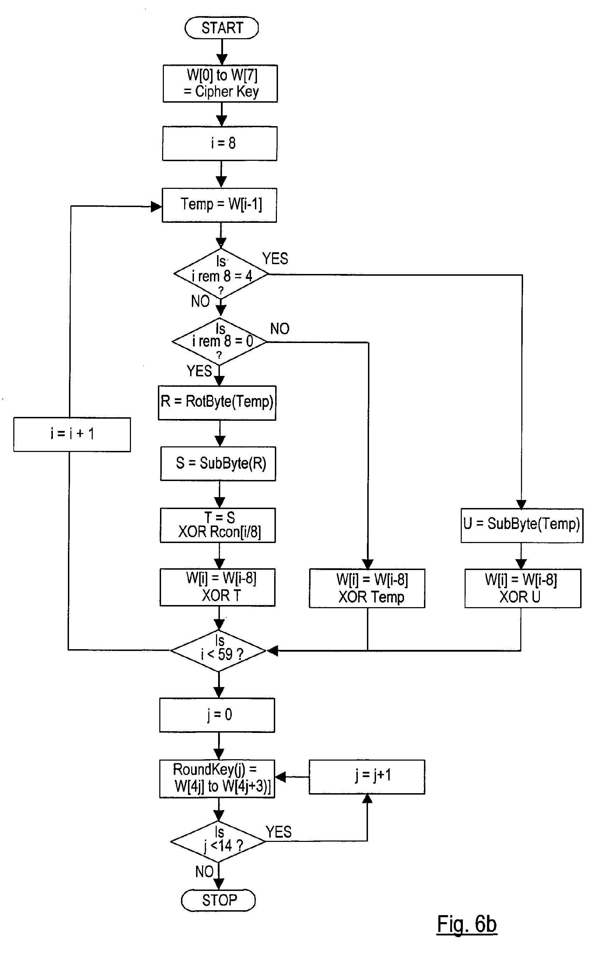

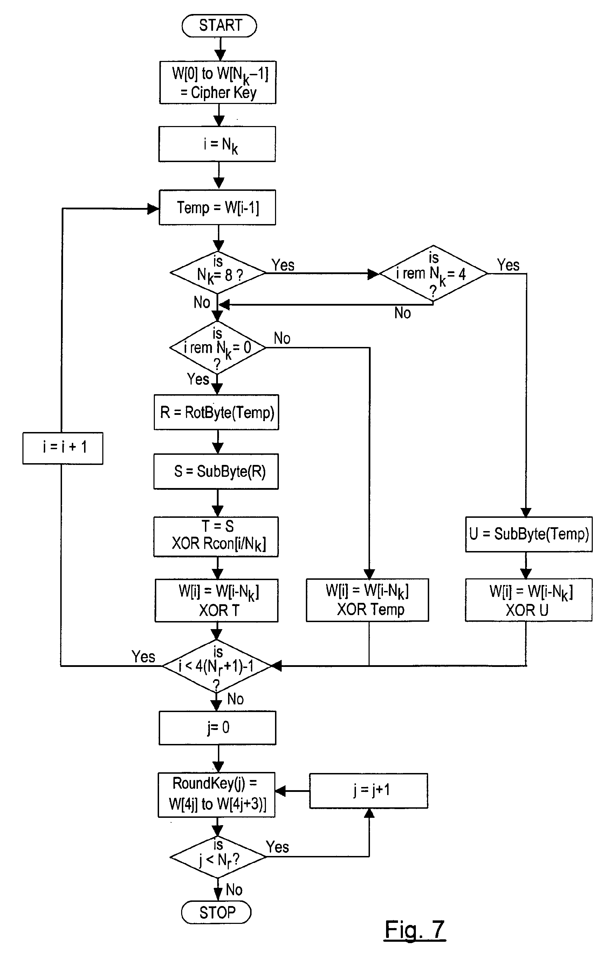

In Figure 6, there is shown a flow chart illustrating the key expansion part (operations 905 to 945) and the round key selection part (operations 955 to 970) included in the key schedule 28. The flow chart of Figure 6 relates to the case where the key block length Nₖ = 4, the data block length N_{b} = 4 and the number of rounds Nᵣ = 10. Alternative flow charts are given in Figures 6a and 6b for the case where the key lengths are 192 bits and 256 bits respectively. Figure 7 shows a composite flow chart for implementing the Rijndael key schedule when the key length is 128-bits, 192-bits or 256-bits. The flow charts of Figures 6a, 6b and 7 will be readily understood by persons skilled in the art by analogy with the following description of Figure 6.

Referring now to Figure 6 (numerals in parentheses() referring to the drawing labels), the input to the key schedule module 50 is the cipher key which is assigned to the first four words W[0] to W[3] of the expanded key (905). A counter *i* (which represents the position of a word within the expanded key) is set to four (910). The word W[*i*-1] (which initially is W[3]) is assigned to a 4-byte word *Temp* (915). A remainder function *rem* is performed on the counter *i* to determine if its current value is a multiple of Nₖ, which in the present example is equal to 4 (920). If the result of the *rem* function is not zero i.e. if the counter value is not exactly divisible by 4, then the word W[*i*-4] is XORed with the word currently assigned to *Temp* to produce the next word W[*i*] (950). For example, when *i* = 5, W[5] is produced by XORing W[1] with W[4].

The value of counter *i* is then tested to check if all the words of the expanded key have been produced - 44 words are required in the present example (945). If *i* is less than 44 i.e. the expanded key is not complete, then counter *i* is incremented (946) and control returns to step 915.

If the result of the *rem* function is zero (920), this indicates that the word currently assigned to *Temp* is in a position that is a multiple of Nₖ and so requires to undergo a transformation. A function *RotByte* is performed on the word assigned to *Temp,* the result being assigned to a 4-byte word *R* (925). The *RotByte* function involves a cyclical shift to the left of the bytes in a 4-byte word. For example, an input of (B₀, B₁, B₂, B₃) will produce the output (B₁, B₂, B₃, B₀).

A function *SubByte* is then performed on R (930), the result being assigned to a 4-byte word S. *SubByte* operates on a 4-byte word and involves subjecting each byte to the ByteSub transformation 30 described above.

The resulting word S is XORed with the result of a function *Rcon[x],* where *x* = *i*/4, the result being assigned to a 4-byte word *T* (935). *Rcon[x]* returns a 4-byte vector, *Rcon[x] =* (*RC(x),* '00', '00', '00'), where the values of *RC[x]* are as follows:

| | | | | |
|---|---|---|---|---|
| RC[1] = '01' | RC[2] = '02' | RC[3] = '04' | RC[4] = '08' | RC[5] = '10' |
| RC[6] = '20' | RC[7] = '40' | RC[8] = '80' | RC[9] = '1B' | RC[10] = '36' |

The word W[*i*-4] is then XORed with the word currently assigned to *T* to produce the next word W[*i*] (940).

The value of counter *i* is then tested to check if all the words of the expanded key have been produced (945). If *i* is not less than 43 then the expanded key is complete.

To perform round key selection, a second counter j (which represents a round key index) is set to zero (960). Four 4-byte words W[4j] to W[4j+3] are assigned to Round Key[j] (965) forj = 0 to 10 (965, 970), j being incremented in steps of 1 (975). Thus, for a ten round encryption/decryption, eleven round keys are provided, round key 0 to round key 10 where round key 0 comprises words W[0] to W[3] of the expanded key (i.e. the original cipher key), round key 1 comprises words W[4] to W[7] of the expanded key, and so on (See Fig. 1c). Round key 0 is used by the data/key addition module 48, round key 1 is provided to the round module 44 for round 1, round key 2 is provided to the round module 44 for round 2 and so on until round key 10 is used in the round module 46 for the final round (see Figs 4 and 5).

The round keys are created as required, hence, round key 0 is available immediately, round key 1 is created one clock cycle later and so on.

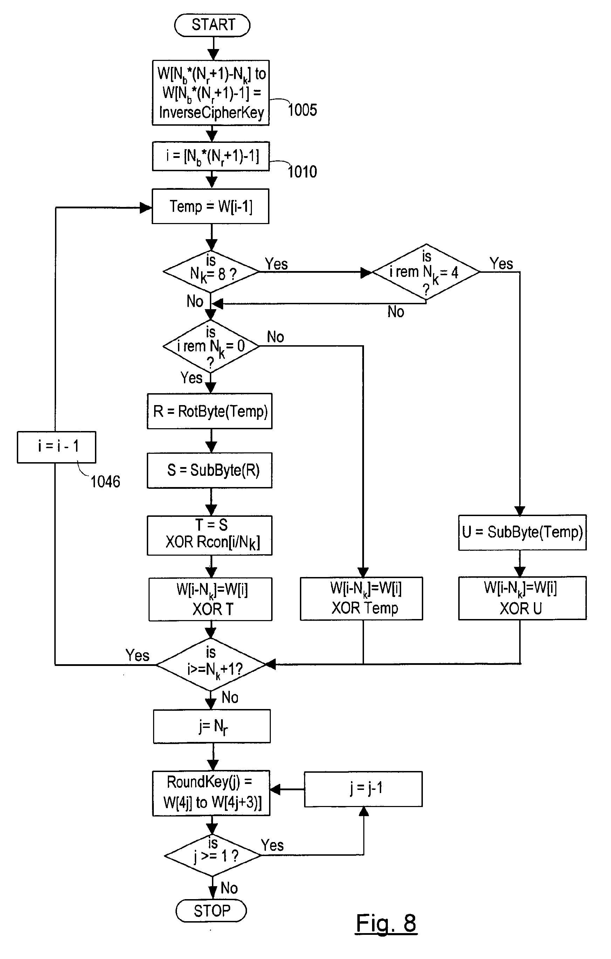

Figure 8 shows a flowchart illustrating the implementation of the Rijndael key schedule 28 for use in decryption.
Key expansion is performed from the inverse cipher key so that the words 17 of the expanded key are produced in the order that they are required for decryption. Hence, in module 1005, the words 17 of the inverse cipher key are assigned to W[(*N*_{*b*}***(*N*_{*r*}*+*1))*-N*_{*k*}] to W[(*N*_{*b*}*(*N*_{*r*}+1))-1] respectively and, in module 1010, counter *i* is set to (*N*_{*b*}*(*N*_{*r*}+1))-1) and decremented by 1 (module 1046) after each new word W[*i*-*N*_{*k*}] is produced until *i = N*_{*k*}. The flowchart of Figure 8 shows the implementation of the key schedule for = 4, 6 or 8 and will be readily understood by a skilled person by analogy with Figures 6, 6a, 6b and 7.

There are a number of ways in which the flow charts of Figures 6, 6a, 6b, 7 and 8 can be implemented using, for example, direct hardware design or using conventional hardware description language (HDL), such as VHDL, together with conventional hardware synthesis tools.
As is now described, the present invention provides an apparatus for production of encryption/decryption keys. The apparatus of the invention is particularly suited for efficient implementation of key expansion in accordance with the Rijndael key schedule.

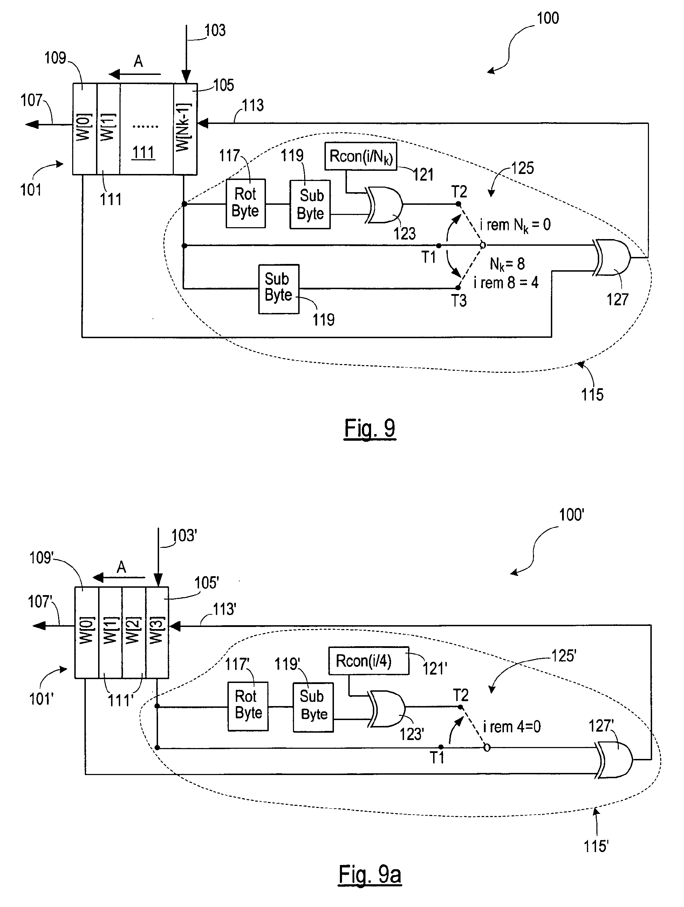

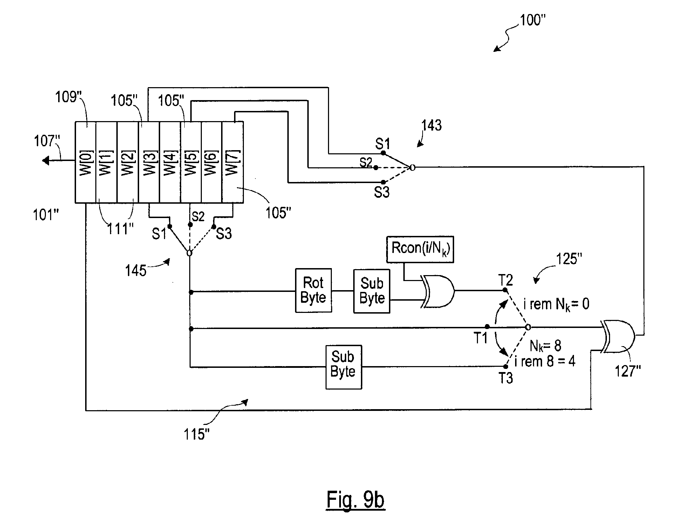

Figure 9 shows an apparatus 100 according to the invention for generating encryption keys and, in particular, for implementing Rijndael key expansion as shown in the flow chart of Figure 7. The apparatus 100 comprises a shift register 101, or similar data storage means, for storing the cipher key and sub-keys generated from the cipher key. In particular, the shift register 101 is arranged to store the cipher key initially and then to store each subsequent vector or word 17 of the expanded key as it is created. The arrangement is such that, as each newly created word 17 of the expanded key is input to the shift register 101, a word of the cipher key (and subsequently of the expanded key) is displaced and output from the shift register 101. The size of the shift register 101 is equal to the size of the cipher key length. For implementing the Rijndael key schedule, the size of the shift register is *N*_{*k*} *x 4 bytes.* Thus, when *N*_{*k*} = 4, the shift register 101 comprises four 4-byte registers, or storage locations, and so on.

The shift register 101 has an initialization input 103, by which data can be supplied to a first storage location 105, and an output 107, by which data can be displaced from a final storage location 109. Between the first and final storage locations 105, 109, the shift register 101 comprises *N*_{*k*}-2 intermediate storage locations 111. In the present embodiment, each storage location 105, 109, 111 is 4-bytes in size to accommodate the 4-byte words 16, 17 that make up the cipher key and the expanded key respectively. The shift register 101 has a second input 113 by which data can be supplied to the first storage location 105.

The shift register 101 operates in normal manner - the respective contents of each register storage location are shifted through the shift register from one storage location to the next in successive operational cycles, the operational cycles typically being governed by a clock signal (not shown). Thus, when a block, in the present embodiment a 4-byte word, of data is supplied to an input 103, 113 of the shift register 101, it is placed in the first storage location 105. In the same clock cycle, the data block that had been stored in the final storage location 109 is displaced from the shift register 101 via output 107 and the data blocks stored in the intermediate storage locations 111 are shifted to the adjacent or successive storage location 111, 109 in the direction indicated by arrow A (i.e. towards the final storage location). In this way, a data block enters the shift register in the first storage location 105 and is shifted through the intermediate storage locations 111 consecutively as each subsequent data block enters the first storage location 105 until it reaches the final storage location 109 whereupon it is displaced from the shift register 101 via output 107 upon receipt of the next new data block in the first storage location 105. If the shift register 101 is empty to begin with, then each storage location may be loaded with a respective data block by inputting data blocks in sequence into the first storage location - as each successive data block is input, the preceding data block or blocks are shifted through the shift register 101 one storage location at a time until the shift register 101 is full.

A conventional shift register or other data buffer device, such as a FIFO (First-In First-Out) memory, is suitable for use as the shift register 101.

The apparatus 100 is generic and shows how to implement the Rijndael key schedule 28 when *N*_{*k*} = 4, 6 or 8. The apparatus includes circuitry 115 for performing appropriate transformations and logical operations on the data stored in the first storage location 105 and the data stored in the final storage location 109 to produce the next data block for storage in the first storage location 105. Initially, the cipher key W[0] to W[*N*_{*k*}-1] is loaded into the *N*_{*k*} storage locations of the shift register 101 via input 103 in conventional manner such that W[0] is held in the final storage location 109 and W[*N*_{*k*}-1] is held in the first storage location 105. The circuitry 115 is then enabled to operate on W[0] and W[*N*_{*k*}-1] to produce the next word 17 of the expanded key namely W[*N*_{*k*}]. W[*N*_{*k*}] is then placed in the first storage location 105 via input 113.
In the same cycle, W[0] is shifted out of the shift register 101 via output 107. Thus, at the end of the first operational cycle of the apparatus 100, the shift register contains words W[1] to W[*N*_{*k*}], with W[1] in the final storage location 109, W[*N*_{*k*}] in the first storage location 105 and the intermediate words W[2] to W[*N*_{*k*}-1] in consecutive order in the intermediate storage locations 111. In the next operational cycle of the apparatus 100, the circuitry 115 performs the necessary transformations an other operations on words W[1] and W[*N*_{*k*}] to produce the next word 17 of the expanded key, namely W[*N*_{*k*}+1], which is then loaded into the first storage location 105 of the shift register 101 while W[1] is shifted out of the shift register 101. Thus, in each successive operational cycle of the apparatus 100, a new word 17 of the expanded key is created and the word 17 *N*_{*k*} positions in advance of the new word is output from the apparatus 100. The operation of the apparatus 100 continues in this way until the last word 17 of the expanded key, namely W[(*N*_{*b*}*(*N*_{*r*}+1))-1], is created. At this time, the shift register 101 contains the expanded key words W[(*N*_{*b*}*(*N*_{*r*}+1))-*N*_{*k*}] to [(*N*_{*b*}***(*N*_{*r*}+1))-1]. The circuitry 115 is then disabled and the expanded key words remaining in the shift register 101 are shifted out of the register 101 in conventional manner.

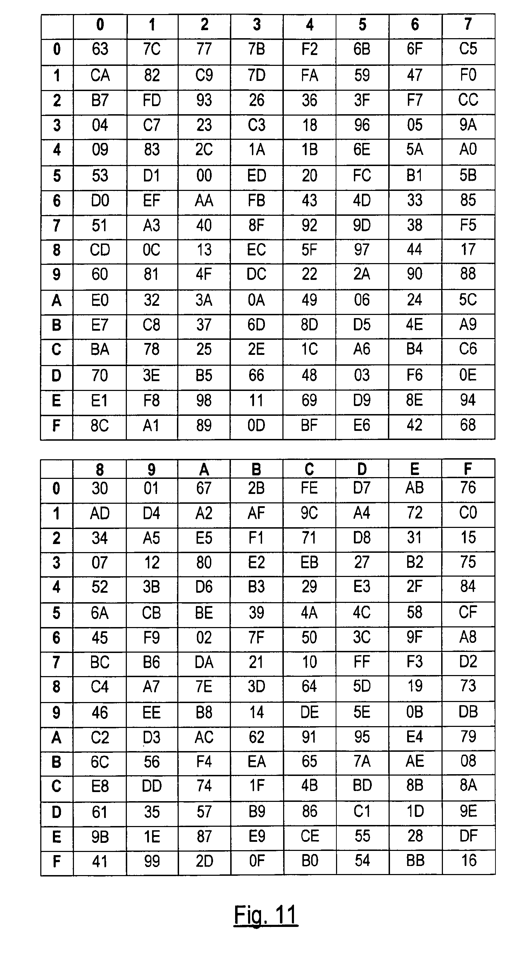

The circuitry 115 is arranged to perform the Rijndael transformations and other operations as described above and illustrated in the flow chart of Figure 7. The circuitry 115 includes a RotByte module 117 for performing a cyclic shift to the left of each byte in the 4-byte word. This may conveniently be implemented by hardwiring. The circuitry also includes a SubByte module 119 for performing the Rijndael ByteSub transformation. Conveniently, the SubByte module 119 comprises one or more Look-Up Tables (LUT) (not shown). Each byte of each word 17 passed through the SubByte module 119 is input to a LUT to produce a corresponding 8-bit output. Figure 11 shows two tables of values suitable for use in a LUT for implementing the Rijndael ByteSub transformation. For example, if the input byte 'B3' (hexadecimal) is input to a LUT containing these values, then the 8-bit output returned by the LUT is '6D', while if the input byte is '5A', the output byte is 'BE', and so on. LUTs can be implemented in a number of conventional ways using, for example, RAMs or ROMs.

The circuitry 115 also includes a *Rcon* module 121 for implementing the *Rcon*(x) function described above, where x = *i*/*N*_{*k*}*, i* representing a counter that counts the operation cycles of the apparatus 100 and corresponds with an index to the words 17 of the expanded key.

Counter *i* starts at *N*_{*k*} and increments by 1 for each operational cycle of the apparatus 100 up to [(*N*_{*b*}*(*N*_{*r*}+1))-1]. For *i* = 0 to *N*_{*k*}-1, the circuitry 115 is disabled and the cipher key is loaded into the shift register 101. For *i = N*_{*k*} to [(*N*_{*b*}*(*N*_{*r*}+1))-1], the circuitry is enabled and the words of the expanded key are generated as described above.

The *Rcon* module 121 may conveniently be implemented by means of a LUT. The respective outputs of the *Rcon* module 121 and the SubByte module 119 are XORed by gate 123.

In order to implement the variations required by Rijndael, the circuitry 115 includes a switching mechanism 125 whereby one or other of terminals T1, T2 and T3 may be selected at one time. The selection position adopted by the switch 125 is controlled by the value of counter *i*. Normally, the switch 125 selects terminal T1. In this state, the respective words in the first and final register storage locations 105, 109 are XORed by gate 127 to produce the next word 17 of the expanded key. When *i rem N*_{*k*} = 0, the switch 125 selects terminal T2 whereupon the word stored in the first storage location 105 is passed through the RotByte module 117, SubByte module 119 and XOR gate 123 before being XORed with the contents of the final location 109 by gate 127. When *N*_{*k*} = 8 and i *rem* 8 = 4, the switch 125 selects terminal T3 whereupon word stored in the first storage location 105 is passed through a SubByte module 119' before being XORed with the contents of the final location 109 by gate 127.

The counter *i* may be implemented in any convenient conventional manner and used, as described above, to in the calculation of the *Rcon* and *rem* functions. The *rem* function may be implemented in any convenient manner, for example by a LUT (not shown) or by a conventional comparator module (not shown) arranged to compare the values of *i* with known multiples of *N*_{*k*}.

The shift register 101 shifts data every clock cycle. In order to synchronize the operation of the apparatus 100, i.e. to synchronize the flow of data words in the apparatus 100, a further data register (not shown) is included in the apparatus 100. Conveniently, the further data register is included in the SubByte module 119 since, in the preferred embodiment, the SubByte module 119 is implemented by one or more LUTs, which typically comprise a RAM(s) or ROM(s) which, in turn, typically include a data register in their architecture. The shift register 101 and the further register are synchronized to a common clock signal in conventional manner. The encryption or decryption apparatus of which the apparatus of the invention is part, is also synchronized to the common clock signal.

Figure 9a shows, by way of example, a schematic view of an apparatus 100' for implementing the Rijndael key expansion where *N*_{*k*} = 4 (corresponding to the flow chart of Figure 6). In this embodiment, it will be seen that the switch 125' need only select either terminal T1 or T2 (T2 is selected when *i* rem 4 = 0). The shift register 101' is a 4-word shift register (which in this case is a 4 x 4-byte shift register). Initially, the shift register 101' is loaded with the cipher key W[0] to W[3] in four cycles where *i* = 0 to 3. In the cycle where *i* = 4, W[0] is shifted out of the register 101' via output 107' and a new word W[4] is created by the circuitry 115' and stored in the first storage location 105. Hence, the shift register 101' now contains W[1] (in the final location 109'), W[2], W[3] (in the intermediate locations 111') and W[4]. The process repeats for *i* = 5 to 43. When *i* = 43, the shift register 101' contains W[40] (in the final location 109'), W[41], W[42] (in the intermediate locations 111') and W[43] in the first location 105. These words 17 can then be read from the shift register 101' in normal manner.

Figure 9b shows a further embodiment of the invention in which the apparatus 100'' is able to support either a 128-bit, 192-bit or 256-bit cipher key depending on the setting of first and second switches 143, 145. The apparatus 100'' comprises a shift register 101'' having eight storage locations 111''. The switches 143, 145 each have three selectable terminals S1, S2, S3 which connect the circuitry 115'' with respective storage locations of the shift register 101''. The setting of the switches 143, 145 determines the effective size of the shift register 101'' and also determines which of the storage locations 111'' serves as said first storage location 105''. The shift register 101'' is loaded initially with the *N*_{*k*}-word cipher key in conventional manner. When *N*_{*k*} = 4, the switches 143, 145 are arranged to select terminals S1 and so only four storage locations 111'' of the shift register 101" are used. When *N*_{*k*} = 6, the switches 143, 145 are arranged to select terminals S2 and only six storage locations of the shift register 101'' are used. When *N*_{*k*} = 8, the switches are arranged to select terminals S3 and all eight storage locations of the shift register 101'' are used.

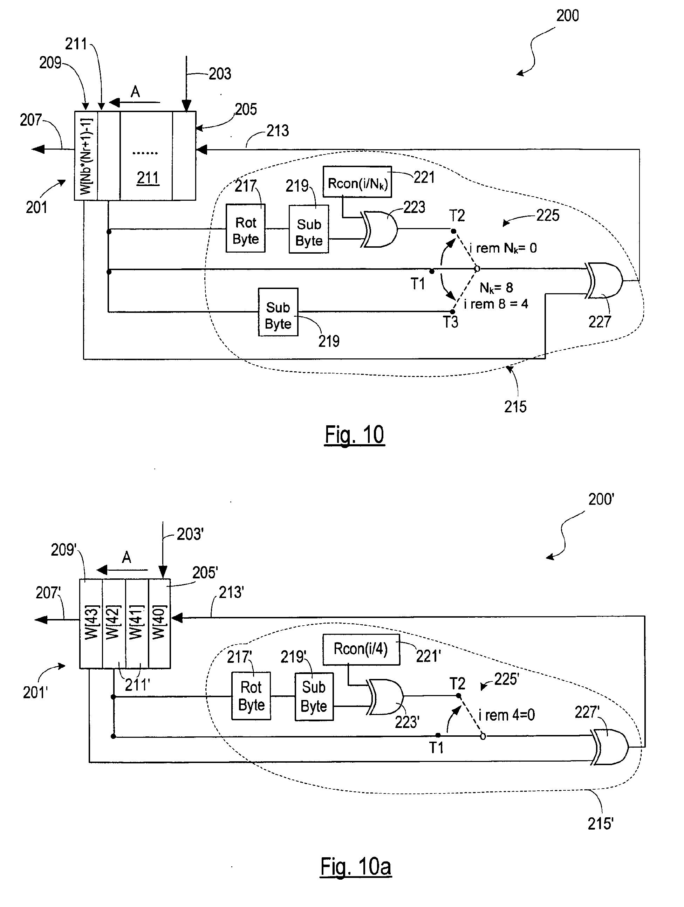

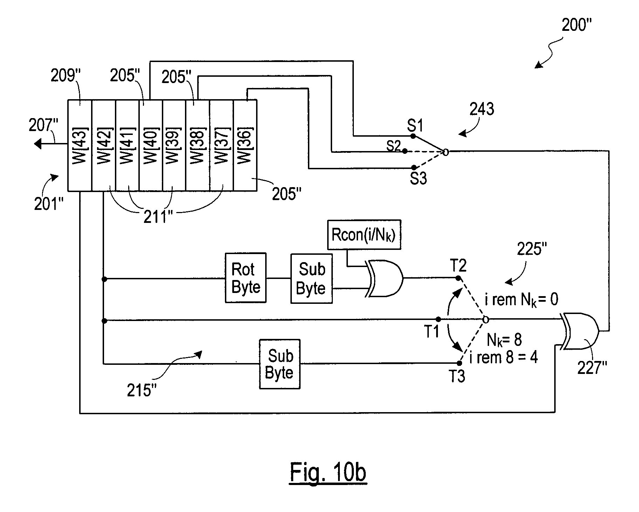

Figure 10 illustrates a schematic view of a further embodiment of the invention in the form of an apparatus 200 for implementing the Rijndael key schedule 28 for data decryption. The apparatus 201 implements the key expansions operations illustrated in Figure 8. The apparatus 200 is generally similar in structure to the apparatus 100 and includes a shift register 201 and circuitry 215 for performing the required Rijndael transformations and other operations. To this end, the apparatus 200 includes a Rotbyte module 217, SubByte modules 219, an *Rcon* module 221, XOR gates 223, 227 and a switching mechanism 125 in similar arrangement to the apparatus 100. However, in the apparatus 200, the circuitry 215 operates on the data, i.e. words of the inverse cipher key and the expanded key, contained in the final storage location 209 of the shift register 201 and the penultimate storage location 211a of the shift register 201. Initially, the shift register 201 is loaded with the inverse cipher key W[(*N*_{*b*}*(*N*_{*r*}+1))-*N*_{*k*}] to W[(*N*_{*b*}*(*N*_{*r*}+1))-1] in consecutive order such W[(*N*_{*b*}*(*N*_{*r*}+1))-1] is stored in the final storage location 209 and W[(*N*_{*b*}*(*N*_{*r*}+1))-*N*_{*k*}] is stored in the first storage location 205. The apparatus 200 operates in substantially similar manner to the apparatus 100. However, counter *i* is initialized to the value *N*_{*b*}***(*N*_{*r*}+1)-1 and is decremented by 1 for each operational cycle of the apparatus 200 until *i = N*_{*k*}.

It will be seen that the apparatus 200 produces the words 17 of the expanded key in the order required for decryption, i.e. reverse order, each successive word being shifted out of the shift register 201 in consecutive operation cycles of the apparatus 200.

Figure 10a illustrates, by way of example, a schematic view of an apparatus 200' for implementing the Rijndael key expansion as shown in the flow chart of Figure 8 for where *N*_{*k*} = 4. As for the apparatus 100', it will be seen that the switch 225' need only select either terminal T1 or T2 (T2 is selected when *i rem* 4 = 0). The shift register 201' is a 4 x 4-byte shift register. Initially, the shift register 201' is loaded with the inverse cipher key W[43] to W[40]. In the subsequent cycle, W[43] is shifted out of the register 201' via output 207' and a new word W[39] is created by the circuitry 215' and stored in the first storage location 205. Hence, the shift register 201' now contains W[42] (in the final location 209'), W[41], W[40] (in the intermediate locations 211') and W[39]. The process repeats until the shift register 201' contains W[3] (in the final location 209'), W[2], W[1] (in the intermediate locations 211') and W[0] in the first location 205. These words 17 can then be read from the shift register 201' in normal manner.

Figure 10b shows a further embodiment of the invention in which the apparatus 200'' is able to support either a 128-bit, 192-bit or 256-bit cipher key depending on the setting of a switch 243. The apparatus 200'' comprises a shift register 201'' having eight storage locations 211''. The switch 243 has three selectable terminals S1, S2, S3 which connect the circuitry 215'' with respective storage locations of the shift register 201''. The setting of the switch 243 determines the effective size of the shift register 201'' and also determines which of the storage locations 211'' serves as said first storage location 205''. The shift register 201'' is loaded initially with the *N*_{*k*}-word cipher key in conventional manner. When *N*_{*k*} *=* 4, the switch 243 is arranged to select terminal S1 and so only four storage locations of the shift register 201'' are used. When *N*_{*k*} = 6, the switch 243 is arranged to select terminal S2 and only six storage locations of the shift register 201'' are used. When *N*_{*k*} = 8, the switch is arranged to select terminal S3 and all eight storage locations of the shift register 201'' are used.

In Figures 9, 9a, 10, 10a, the shift registers 101, 101', 201, 201' are shown with two inputs to the first storage location 105, 105', 205, 205' for clarity. In practice, a single input may be provided for performing all input operations to the shift registers 101, 101', 201, 201'.

It will be understood from the foregoing that, after an initial delay of *N*_{*k*} clock cycles to allow the cipher key/inverse cipher key to be loaded into the shift register 101, 101', 101", 201, 201', 201", the expanded key is output from the apparatus 100, 100', 100'', 200, 200', 200" one word 17 at a time and in successive clock cycles. Moreover, by initializing the shift register 101, 101', 101'', 201, 201', 201'' with the cipher key or inverse cipher key as appropriate, the words are produced in the order that they are required by the surrounding encryption apparatus or decryption apparatus. The apparatus of the invention is particularly suited for use with an encryption/decryption apparatus in which each encryption or decryption round is performed over a plurality of successive clock cycles using the same round module. By way of example the apparatus 100, 100', 100'' are suitable for use as the key scheduler 50 of the encryption apparatus 40 of Figure 5a, while the apparatus 200, 200', 200'' are suitable for use as the key scheduler 50' of the decryption apparatus 40' of Figure 5b.

The embodiments described herein relate primarily to the case where the data block length, *N*_{*b*}, is 128-bits, the round is performed over four clock cycles and the key scheduling apparatus 100, 100', 100'', 200, 200', 200'' have a 4-register shift register, thus producing a round key every four cycles. In the case of a 192-bit data block, the round will be performed over 6 clock cycles, the key scheduling apparatus has a 6-register shift register and produces a round key every six clock cycles. For a 256-bit data block the round is performed over 8 clock cycles and the corresponding key scheduling apparatus has a 6-register shift register and creates a round key every 8 clock cycles.

It will be noted that the apparatus 200, 200', 200'' are arranged to perform, in particular, on-the-fly Rijndael decryption Round key calculation. This is particularly advantageous as it obviates the need to store the expanded key or to wait until the expanded key is generated from the cipher key before beginning decryption. This removes a latency of at least 10 clock cycles in the operation of the decryption apparatus. Further, the use of the shift register 101, 101', 101'', 201, 201', 201'' in the manner described above results in the apparatus of the invention being smaller, in terms of gate count and physical size, than conventional implementations which may use, for example, RAMs and multiplexers.

The apparatus 100, 100', 100'', 200, 200', 200'' may be implemented on an FPGA device or other conventional devices such as other Programmable Logic Devices (PLDs) or an ASIC (Application Specific Integrated Circuit). In an ASIC implementation, the LUTs may be implemented in conventional manner using, for example, standard RAM or ROM components.

The invention is not limited to the embodiments described herein which may be modified or varied without departing from the scope of the invention.

## Claims

1. An apparatus for generating a plurality of sub-keys from a primary key comprising a plurality of data words, the apparatus comprising: a shift register having a plurality of storage locations one for each data word of the primary key; and a transformation apparatus arranged to perform one or more logical operations on respective data words from at least two of said storage locations to produce a new data word, the arrangement being such that said new data word is loaded into a first of said storage locations, whereupon the data words stored in said shift register are shifted to a respective successive storage location and the data word in a final of said storage locations is output from said shift register, said sub-keys being comprised of one or more of said output data words.

2. An apparatus as claimed in Claim 1, wherein said new data word is loaded into said first storage location via a first switch, said switch being arranged to select which of said storage locations serves as said first storage location.

3. An apparatus as claimed in Claim 1 or 2, wherein at least one data word is provided to said transformation module from said shift register via a second switch, the second switch being arranged to select from which storage location said at least one data word is provided.

4. An apparatus as claimed in any preceding claim, wherein the transformation apparatus is arranged to perform transformations according to the Rijndael block cipher.

5. An apparatus as claimed in Claim 4, wherein the shift register is initialised with a primary key comprising a Rijndael cipher key and said transformation apparatus is arranged to perform said one or more logical operations on the respective data words stored in said first and said final storage locations.

6. An apparatus as claimed in Claim 4, wherein the shift register is initialised with a primary key comprising a Rijndael inverse cipher key and said transformation apparatus is arranged to perform said one or more logical operations on the respective data words stored in said final storage location and the penultimate storage location.

7. A method of generating a plurality of sub-keys from a primary key comprising a plurality of data words, method comprising:
loading the primary key into a shift register having a plurality of storage locations one for each data word of the primary key;
performing one or more logical operations on respective data words from at least two of said storage locations to produce a new data word;
loading said new data word into a first of said storage locations,
whereupon the data words stored in said shift register are shifted to a respective successive storage location and the data word in a final of said storage locations is output from said shift register, said sub-keys being comprised of one or more of said output data words.

8. A data encryption and/or decryption apparatus comprising an apparatus for generating a plurality of sub-keys as claimed in Claim 1.

9. A computer program product comprising computer usable instructions for generating an apparatus according to Claim 1.
